**Europäisches Patentamt**

**European Patent Office**

**Office européen des brevets**

(19)

(11) Veröffentlichungsnummer: **0 077 067 B1**

(12) **EUROPÄISCHE PATENTSCHRIFT**

(45) Veröffentlichungstag der Patentschrift:
**16.07.86**

(51) Int. Cl.⁴: **C 08 G 12/32, C 08 G 12/42, C 08 L 61/28, D 21 H 3/56**

(21) Anmeldenummer: **82109415.8**

(22) Anmeldetag: **12.10.82**

(54) **Wässrige Lösung eines Melamin-Formaldehyd-Harzes und Verfahren zu ihrer Herstellung.**

(30) Priorität: **14.10.81 DE 3140715**

(43) Veröffentlichungstag der Anmeldung:
**20.04.83 Patentblatt 83/16**

(45) Bekanntmachung des Hinweises auf die Patenterteilung:
**16.07.86 Patentblatt 86/29**

(84) Benannte Vertragsstaaten:
**DE FR IT**

(56) Entgegenhaltungen:
**BE - A - 678 277
FR - A - 2 021 364
FR - A - 2 232 560
US - A - 4 093 579**

(73) Patentinhaber: **CASSELLA Aktiengesellschaft, Hanauer Landstrasse 526, D-6000 Frankfurt am Main 61 (DE)**

(72) Erfinder: **Keller, Karlfried, Dr., Marktstrasse 127, D-6000 Frankfurt am Main 60 (DE)**
Erfinder: **Dörries, Peter, Hansaallee 80, D-6000 Frankfurt am Main 1 (DE)**

(74) Vertreter: **Urbach, Hans-Georg, Dr. et al, Hanauer Landstrasse 526, D-6000 Frankfurt am Main 61 (DE)**

## Beschreibung

Wässrige Lösungen von Melamin-Formaldehyd-Vorkondensaten – im täglichen Sprachgebrauch im allgemeinen als Melaminharze oder Melaminharz-Lösungen bezeichnet – sind aus zahlreichen Publikationen bekannt. Derartige wässrige Melaminharz-Lösungen werden vor allem als sogenannte Tränkharz-Lösungen für die Herstellung von beschichteten Holzwerkstoffen und Schichtpressstoffen verwendet. Hierbei werden bahnförmige Trägermaterialien aus Textilien oder Glasvliesen, vorzugsweise aber Papierbahnen mit einer Tränkharzlösung, imprägniert, zwischengetrocknet und anschliessend unter Druck und bei erhöhter Temperatur, in der Regel bei Temperaturen über 100 °C auf die Oberfläche von Holzspanplatten zu beschichteten Holzwerkstoffen oder zusammen mit phenolharzimprägnierten Papierbahnen zu Schichtpressstoffen verarbeitet. Während des Pressens bei erhöhter Temperatur erfolgt das Auskondensieren des Melaminharzes zu harten unlöslichen, unschmelzbaren, weitgehend vernetzten Produkten, die dann eine äusserst widerstandsfähige Oberfläche, insbesondere mit grosser Härte, Kratz- und Chemikalienfestigkeit, auf dem beschichteten Holzwerkstoff bzw. dem Schichtpressstoff bilden.

Nachteilig ist jedoch der hohe Wassergehalt dieser Tränkharz-Lösungen mit in der Regel mehr als 40% (diese und alle folgenden Prozentangaben beziehen sich auf das Gewicht), denn es ist erforderlich, praktisch die gesamte Menge Wasser nach dem Tränken der Trägerbahnen durch Trocknen bei erhöhter Temperatur zu verdampfen, ehe die Trägerbahnen unter Druck- und Hitzeeinwirkung zu den erwähnten Schichtwerkstoffen verarbeitet werden können. Der erforderliche Trocknungsprozess verbraucht wegen der hohen Verdampfungswärme des Wassers sehr viel Heizenergie, was die Wirtschaftlichkeit des Verfahrens stark beeinträchtigt.

Es war bisher nicht möglich, Tränkharz-Lösungen mit Molverhältnissen Melamin:Formaldehyd von 1:(1,5 bis 1,8) und mehr als 60% Festharzgehalt herzustellen, welche die erforderliche Tränkviskosität von höchstens 30 DIN Sekunden nach 4 DIN 53 211 bei 20 °C nicht überschritten und ausserdem die ebenfalls erforderliche Haltbarkeit bei Raumtemperatur von mindestens 3 Wochen aufwiesen. Es war zwar durchaus möglich, jeweils eine der beiden genannten Forderungen – Höchstviskosität oder Haltbarkeit – zu erfüllen, nicht aber beide Forderungen gleichzeitig. Dies war dadurch verursacht, dass niedrige Tränkviskositäten bei hohem Harzgehalt nur durch niedrige Kondensationsgrade – gemessen durch die Wasserverdünnbarkeit der Harzlösungen – erreichbar sind. Solche niedrigen Kondensationsgrade bedingen dann allerdings auch relativ hohe Anteile monomerer Anlagerungsprodukte von Formaldehyd an Melamin – sogenannte Methylolmelamine – in der Tränkharzlösung. Da nun diese Methylolmelamine schwer löslich in Wasser sind, fallen sie rasch aus den Harzlösungen aus, was deren Haltbarkeit und Verarbeitbarkeit unter die praktisch tolerierbare Grenze von 3 Wochen drückt. Daher war es bisher erforderlich, Melamintränkharze mit Wasserverdünnbarkeiten von weniger als 2 Volumenteilen Wasser pro Volumenteil Harzlösung herzustellen, wenn ausreichende Haltbarkeit und Tränkviskositäten unter 30 DIN Sekunden garantiert werden sollten, was wiederum Harzgehalte von höchstens 60% zuliess.

Die Herstellung von wässrigen Melaminharzen, die auch für Tränkzwecke geeignet sind und relativ hohe Harzgehalte aufweisen, ist zwar bereits in der DE-OS 2 851 760 beschrieben worden. Die Haltbarkeit der Harze wird dabei durch den Zusatz bestimmter tertiärer Amine erzielt, wobei jedoch Haltbarkeiten von mindestens 3 Wochen nur bei Festharzgehalten von unter 60% oder bei einem Molverhältnis Melamin:Formaldehyd von 1:2 erzielt werden. Diese Harze haben aufgrund ihres Amingehalts bei der Verarbeitung einen erhöhten Bedarf an sauren Härtern. Tränkharze mit einem Molverhältnis Melamin:Formaldehyd von 1:2 zeigen zudem gegenüber Tränkharzen mit einem Molverhältnis Melamin:Formaldehyd von höchstens 1:1,8 einen wesentlich höheren Bedarf an verteuernden Weichmachern.

Es ist auch bereits bekannt (DE-PS 1 158 705), dass man mehrwertige Alkohole und auch Zucker Melamintränkharzen in Mengen von 0,05 bis 1 Mol pro Mol Melamin zusetzen kann, wobei vor allem die elastifizierende Wirkung dieser Zusätze auf die Harze und die daraus hergestellten Schichtwerkstoffe hervorgehoben werden. Es wurde auch bereits von einer stabilisierenden Wirkung solcher Zusätze auf Tränkharze berichtet (siehe z.B. DE-OS 2 144 534). Es war jedoch bisher nichts darüber bekannt, wie man Tränkharz-Lösungen mit hohem Harzgehalt und niedriger Viskosität (sog. High-Solid-Harze) in ausreichender Stabilität herstellen kann.

Es wurde nun gefunden, dass man wässrige Tränkharzlösungen mit einem experimentell bestimmten Festharzgehalt von mehr als 60%, beispielsweise von 65 bis 70%, bei Viskositäten von höchstens 30 Sekunden nach 4 DIN 53 211 bei 20 °C herstellen kann, die ein Molverhältnis Melamin:Formaldehyd von 1:(1,5 bis 1,8) aufweisen und die mindestens 3 Wochen haltbar sind, wenn man vor, während oder nach der Kondensation 5 bis 20%, vorzugsweise 5 bis 12%, bezogen auf den Festharzanteil, einer hydroxylgruppenreichen Verbindung oder mehrerer hydroxylgruppenreicher Verbindungen aus der Reihe der mehrwertigen Alkohole, nichtreduzierenden Zucker oder der niedrigmolekularen enzymatischen Abbauprodukte der Stärke mit Glucosegehalten unter 1% oder deren Hydrierungsprodukte zusetzt und bis zu einer bei 20 °C gemessenen Wasserverdünnbarkeit von mindestens 1:2 kondensiert.

Die zugesetzten genannten hydroxylgruppenreichen Verbindungen wirken als zuverlässige Inhibitoren für das Auskristallisieren von Methylolmelaminen.

Als mehrwertige Alkohole sind z.B. die handelsüblichen und leicht zugänglichen Vertreter, wie z.B. Ethylen- und Propylenglykol und deren Ethylenoxid- und Propylenoxid-Anlagerungsprodukte, wie z.B. Diethylenglykol, Triethylenglykol etc., ferner Glycerin, Trimethylolpropan, Pentaerythrit und Sorbit geeignet. Auch weniger gebräuchliche mehrwertige Alkohole, wie z.B. Phenyläthandiol, Butandiol, Alkan-α, β-diole, sind geeignet, wenn ihre Wasserlöslichkeit mindestens ca. 10% beträgt.

Als nicht reduzierende Zucker können die bekannten Mono- und Diglykoside, wie z.B. Saccharose, verwendet werden. Besonders geeignet sind indessen niedrigmolekulare enzymatische Hydrolysate der Stärke mit Glucosegehalten unter 1% sowie deren Hydrierungsprodukte. Die Gewinnung derartiger Hydrolysate ist z.B. beschrieben in Ullmanns Enzyklopädie der techn. Chemie, 3. Auflage, Band 16 (1965), Seite 348, oder Winnaker/Küchler: Chemische Technologie, 3. Auflage, Band 3 (1971), Seite 595. Auch Gemische verschiedener mehrwertiger Alkohole und/oder nichtreduzierender Zucker und/oder der genannten Stärkehydrolysate können eingesetzt werden.

Der Zeitpunkt des Zusatzes dieser hydroxylgruppenreichen Verbindungen zu den Melamin-Formaldehyd-Tränkharz-Lösungen also z.B. vor, während und/oder nach der Kondensation, hat nur geringen Einfluss auf die stabilisierende Wirkung gegen das Trübwerden der Tränkharze.

Werden ausser den erwähnten Zusätzen auch noch die als Zusätze ebenfalls bekannten Salze der Amidosulfonsäure verwendet, so muss die Kondensation der Harze in Abhängigkeit von der Sulfamatmenge bereits bei höheren Wasserverdünnbarkeiten als 1:2 abgebrochen werden, da Sulfamate die Löslichkeit von Melaminharzen erhöhen und daher Kondensationsgrad und Viskosität gegenüber Harzen ohne Zusatz von Sulfamaten aber gleicher Wasserverdünnbarkeit deutlich erhöht sind.

Sulfamatzusätze zu Melaminharzen leisten daher keinen wesentlichen Beitrag zur Lösung der der Erfindung zugrunde liegenden Aufgabenstellung, können aber zur Verbesserung der Wasserlöslichkeit verwendet werden.

Ausser den erwähnten Zusätzen können auch weitere bereits als Zusätze zu Tränkharz-Lösungen bekannte Verbindungen, z.B. aus der Klasse der Sulfon- und Carbonamide, einwertige Alkohole, sowie Netzmittel und Härter, ohne Nachteile für die High-Solid-Eigenschaften der erfindungsgemäss hergestellten Harze in Mengen von 1 bis 12% zugesetzt werden.

Die für die erfindungsgemäss hergestellten Tränkharze erforderlichen Molverhältnisse von Melamin zu Formaldehyd liegen in dem verhältnismässig engen Bereich von 1:1,5 bis 1,8. Geringere Mengen Formaldehyd verhindern das vollständige Auflösen des Melamins im wässrigen Formaldehyd bei den erforderlichen Harzkonzentrationen von mehr als 60%. Höhere als die angegebenen Mengen Formaldehyd vergrössern die Neigung der wässrigen Tränkharz-Lösung zur Trübung bei den erforderlichen niedrigen Kondensationsgraden und erfordern ausserdem erhöhte Zusätze an verteuernden Weichmachern.

Die Kondensation der erfindungsgemäss hergestellten Tränkharze erfolgt im übrigen in der bisher bekannten Weise bei pH-Werten von etwa 8 bis 10,4 und Temperaturen von etwa 70 °C bis zur Rückflusstemperatur. Auch die Herstellung unter geringem Überdruck zur Erreichung höherer Temperaturen ist möglich. Bis zu 25% des Melamins können durch andere Aminoplastbildner, wie z.B. Guanidin, Cyanamid, Dicyandiamid, Acetoguanamin, Formoguanamin, insbesondere aber Harnstoff, ersetzt werden. Die Durchführung der Kondensation bei der Aminoplastherstellung ist detailliert beschrieben, z.B. in Kirk-Othmer, Encyclopedia of Chemical Technology, 1. Auflage, Vol. 1 (1947), 756 bis 759; Houben-Weyl «Methoden der organischen Chemie», Bd. XIV/2, «Makromolekulare Stoffe», Teil 2, (1963), Georg Thieme Verlag, Stuttgart, insbesondere Seiten 346 bis 357 (Harnstoffkondensate), Seiten 357 bis 371 (Melaminkondensate); John F. Blais «Amino Resins», Reinhold Publishing Corp., New York, (1959), Seiten 26 bis 53; C. P. Vale «Aminoplastics» Cleaver Hume Press Ltd., London, (1950), Seiten 12 bis 87; Ullmanns Enzyklopädie der technischen Chemie, 4. Auflage, Band 7 (1973), Seiten 403 bis 414.

Bei der Herstellung der erfindungsgemässen Harze wird die Kondensation abgebrochen, wenn die Wasserverdünnbarkeit bei 20 °C mindestens 1:2 beträgt. Zur Bestimmung der Wasserverdünnbarkeit wird eine Probe der Harzlösung bei 20 °C mit Wasser titriert. Die Angabe «Wasserverdünnbarkeit mindestens 1:2» besagt, dass bei dieser Bestimmung 1 Volumenteil der Harzlösung mindestens 2 Volumenteile Wasser aufnehmen kann, ohne dass eine Trübung eintritt.

Die Verwendung der erfindungsgemäss hergestellten High-Solid-Tränkharze bietet insbesondere Vorteile bei der Imprägnierung von Dekorpapieren, die zur Oberflächenvergütung von Holzwerkstoffen (vornehmlich Holzspanplatten, MDF-Platten und harten Holzfaserplatten) eingesetzt werden. Die Verarbeitung der erfindungsgemässen Harze erfolgt dabei in an sich bekannter Weise durch Tränken der Trägerbahnen, vorzugsweise Papier- bzw. Gewebebahnen mit einem erfindungsgemässen High-Solid-Tränkharz. Die getränkte und getrocknete Papier- bzw. Gewebebahn wird auf eine vorbereitete Holz-Werkstoffplatte unter Drucken von ca. 10 bis 100 bar und Temperaturen von ca. 120 bis 180 °C aufgepresst, wobei für die Pressung vorteilhafterweise Mehretagenpressen verwendet werden. Analog können beim Einsatz von mit Phenolharz imprägnierten Trägerbahnen anstelle der Holzwerkstoffplatten Schichtstoffe hergestellt werden, wobei Pressdrucke von ca. 50 bis 150 bar und Temperaturen von ca. 120 bis 180 °C zur Anwendung kommen. Detaillierte Angaben zur Herstellung beschichteter Holzwerkstoffplatten und von Schichtstoffen finden sich in J. F. Blais, loc. cit, Seiten 122 bis 138; C. P. Vale, loc. cit., Seiten 209 bis 214, und Ullmann, loc. cit., Seiten 417 bis 418.

Zur Erzielung einwandfrei geschlossener Oberflächen mit guter Härte müssen die Trägerbahnen eine hohe Beharzung aufweisen. Es ist Stand der Technik, mit Tränkharzen zu arbeiten, die in der Tränkwanne einen Festkörperanteil von 50 bis 56% aufweisen. Die erfindungsgemässen Harze ermöglichen nun, diesen Festkörperanteil auf 60% und mehr, z.B. auf 65%, zu erhöhen, ohne dabei die imprägniertechnischen Eigenschaften negativ zu beeinflussen. Durch die weniger zu verdampfende Wassermenge im Trockner werden wesentliche Energiemengen eingespart. Gegenüber der Verwendung einer üblichen Tränkharz-Lösung wird auch eine Kapazitätsverbesserung der Tränkharzanlage durch eine höhere Laufgeschwindigkeit bei gleicher Temperatur möglich, oder es können bei konstant gehaltener Laufgeschwindigkeit die Trockentemperaturen um 10 bis 15°C reduziert und dadurch Energie eingespart werden.

In den Beispielen sind die Temperaturen in Grad Celsius angegeben.

Beispiel 1

In einem Glaskolben mit Rührer werden 508 g Formaldehydlösung 39%, 3 ml 2n Natronlauge, 110 ml destilliertes Wasser, 22 g Caprolactam, 22 g Diethylenglykol und 504 g Melamin gemischt und rasch auf Rückflusstemperatur (103°) aufgeheizt. Nach 20 min ist die Harzlösung klar und wird nun bei 90°C weiterkondensiert bis zu einer Wasserverdünnbarkeit (Trübungspunkt) von 1:2 bei 20°C. Nach dem Abkühlen werden dem Tränkharz noch 22 g Ethylenglykol zugesetzt. Es wird so eine Tränkharz-Lösung mit einem Festharzgehalt von 65% (gemessen nach DIN 12 605 durch den Gewichtsverlust, den eine Probe von 2 g beim einstündigen Erhitzen auf 120°C in einem Glasschälchen von 35 mm Durchmesser erleidet) und einer Viskosität von 27 DIN-Sekunden (nach 4 DIN 53 211 bei 20°C) erhalten.

Trübungen werden erst später als nach 3 Wochen beobachtet. Die Viskosität steigt während dieser Zeit nur unwesentlich und bleibt dann praktisch über 2 Wochen bei 20 bis 25°C konstant. Das im Beispiel verwendete Diethylenglykol kann ohne Nachteil durch bis zu 88 g eines hydrierten, ca. 70%igen Stärkehydrolysats mit einem Gehalt von weniger als 1% Glucose ersetzt werden.

Wird die Kondensation des Harzes bei einer Wasserverdünnbarkeit von 1:3 (statt 1:2) abgebrochen, so liegt die Endviskosität bei 25 DIN-Sekunden, und die Haltbarkeit ist nur unwesentlich kürzer.

Beispiel 2

2.1 Mit der erfindungsgemäss hergestellten Harzlösung des Beispiels 1 werden unter Praxisbedingungen aus einer 65%igen Lösung unter Zusatz von 0,7% Morpholinsalz der para-Toluolsulfonsäure als Härter (sog. Kurztakteinstellung) und 0,5% eines handelsüblichen Netzmittels bei 35°C Tränkflotten-Temperatur ein mit einem Teakmuster bedrucktes Dekorpapier mit einem Rohgewicht von 80 g/m² auf ein Endgewicht von 190 g/m² beharzt. Das beharzte Dekorpapier wird auf einer mit drei Trockenzonen ausgestatteten Schwebetrockneranlage bei einer Vorschubgeschwindigkeit von 22 m/min in homogene staubfreie Filmbahnen überführt. Die Restfeuchte beträgt 6,5% (Bestimmung durch 5 Minuten lange Nachtrocknung bei 160° von 6,5%).

Bei einem Vergleichsversuch, bei dem dieselbe Papierqualität mit einem handelsüblichen Melamintränkharz mit 55% Festharzgehalt unter sonst gleichen Bedingungen imprägniert wird, kann in der Schwebetrockneranlage bei unveränderter Heizung nur eine Vorschubgeschwindigkeit von 17,0 m/min erzielt werden.

2.2 Mit der erfindungsgemäss hergestellten Harzlösung des Beispiels 1 wird, wie unter 2.1 angegeben, ein 115 g/m² schweres weisses Dekorpapier auf ein Endgewicht von 270 g/m² beharzt. Die Vorschubgeschwindigkeit in der Schwebetrockneranlage beträgt 18,5 m/min und der Restfeuchtegehalt 6,5%.

Bei sonst gleichen Bedingungen wird unter Verwendung eines 55%igen handelsüblichen Melamintränkharzes eine Vorschubgeschwindigkeit von 14,5 m/min erzielt.

2.3 Alle vier nach 2.1 und 2.2 hergestellten Filmbahnen können unter Verwendung eines seidenmattierten hartverchromten Messingpressblechs unter Kurztakt-Verarbeitungsbedingungen (Presszeit 48 s, Presstemperatur 155 bis 158° am Papier, Pressdruck 20 bar) auf 16 mm starke Holzspanplatten aufgepresst werden und liefern dabei einwandfreie Oberflächen, die den Anforderungen des DIN-Entwurfs 68 765, Ausgabe November 1979, entsprechen.

**Patentansprüche**

1. Wässrige Lösung eines Melamin-Formaldehyd-Harzes mit einem Festharzanteil von mehr als 60 Gew.%, enthaltend ein Melamin-Formaldehyd-Vorkondensat und gegebenenfalls ein oder mehrere Modifizierungsmittel, dadurch gekennzeichnet, dass das Molverhältnis Melamin:Formaldehyd = 1:(1,5 bis 1,8) und die Wasserverdünnbarkeit bei 20°C mindestens 1:2, die Viskosität höchstens 30 DIN Sekunden, gemessen nach 4 DIN 53 211 bei 20°C und die Haltbarkeit mindestens 3 Wochen beträgt und das Harz 5 bis 20 Gew.%, bezogen auf Festharzanteil, einer hydroxylgruppenreichen Verbindung oder mehrerer hydroxylgruppenreicher Verbindungen aus der Reihe der mehrwertigen Alkohole, nichtreduzierenden Zukker oder der niedrigmolekularen enzymatischen Abbauprodukte der Stärke mit Glucosegehalten unter 1% oder deren Hydrierungsprodukte enthält.

2. Wässrige Lösung eines Melamin-Formaldehyd-Harzes nach Anspruch 1, dadurch gekennzeichnet, dass das Harz 5 bis 12 Gew.%, bezogen auf Festharzanteil, hydroxylgruppenreicher Verbindungen enthält.

3. Wässrige Lösung eines Melamin-Formaldehyd-Harzes nach Anspruch 1 oder 2, dadurch gekennzeichnet, dass bis zu 25 Gew.% des Melamins durch andere Aminoplastbildner ersetzt sind.

4. Wässrige Lösung eines Melamin-Formaldehyd-Harzes nach einem oder mehreren der Ansprüche 1 bis 3, dadurch gekennzeichnet, dass das Harz, bezogen auf Festharzanteil, 1 bis 12% andere bekannte Modifizierungsmittel für Tränkharze enthält.

5. Verfahren zur Herstellung von wässrigen Lösungen von Melamin-Formaldehyd-Harzen mit einem Festharzanteil von mehr als 60 Gew.%, wobei Melamin und Formaldehyd in Wasser bei alkalischen pH-Werten von bis 10,4 kondensiert werden, dadurch gekennzeichnet, dass man Melamin und Formaldehyd im Molverhältnis 1:(1,5 bis 1,8) bis zu einer bei 20°C gemessenen Wasserverdünnbarkeit von mindestens 1:2 kondensiert und vor, während oder nach der Kondensation 5 bis 20 Gew.%, bezogen auf den Festharzanteil, einer hydroxylgruppenreichen Verbindung oder mehrerer hydroxylgruppenreicher Verbindungen aus der Reihe der mehrwertigen Alkohole, nichtreduzierenden Zucker oder der niedrigmolekularen enzymatischen Abbauprodukte der Stärke mit Glucosegehalten unter 1% oder deren Hydrierungsprodukte zusetzt und die Mengenverhältnisse so wählt, dass Lösungen mit mehr als 60 Gew.% Festharzanteil entstehen.

6. Verfahren nach Anspruch 5, dadurch gekennzeichnet, dass man 5 bis 12 Gew.%, bezogen auf Festharzanteil der hydroxylgruppenreichen Verbindung zusetzt.

7. Verfahren nach Anspruch 5 oder 6, dadurch gekennzeichnet, dass bis zu 25 Gew.% des Melamins durch andere Aminoplastbildner ersetzt werden.

8. Verfahren nach einem oder mehreren der Ansprüche 5 bis 7, dadurch gekennzeichnet, dass man, bezogen auf den Festharzanteil, zusätzlich noch 1 bis 12% andere, für Tränkharze bekannte Modifizierungsmittel zusetzt.

**Claims**

1. Aqueous solution of a melamine-formaldehyde resin having a resin solids content of more than 60% by weight, containing a melamine-formaldehyde precondensate and, if appropriate, one ore more modifying agents, characterised in that the melamine:formaldehyde molar ratio is 1:(1.5 to 1.8) and the dilutability with water at 20°C is at least 1:2, the viscosity is at least 30 DIN seconds measured according to 4 DIN 53 211 at 20°C and the stability is at least 3 weeks, and the resin contains 5 to 20% by weight, relative to resin solids content, of a compound rich in hydroxyl groups, or several compounds rich in hydroxyl groups, belonging to the series comprising polyhydric alcohols, non-reducing sugars or low-molecular enzymatic degradation products of starch having a glucose content below 1% or hydrogenation products thereof.

2. Aqueous solution of a melamine-formaldehyde resin according to Claim 1, characterised in that the resin contains 5 to 12% by weight, relative to resin solids content, of compounds rich in hydroxyl groups.

3. Aqueous solution of a melamine-formaldehyde resin according to Claim 1 or 2, characterised in that up to 25% by weight of the melamine are replaced by other aminoplast formers.

4. Aqueous solution of a melamine-formaldehyde resin according to one or more of Claims 1 to 3, characterised in that the resin contains, relative to resin solids content, 1 to 12% of other known modifying agents for impregnating resins.

5. Process for the preparation of aqueous solutions of melamine-formaldehyde resins having a resin solids content of more than 60% by weight, in which melamine and formaldehyde are subjected to condensation in water at alkaline pH values of up to 10.4, characterised in that melamine and formaldehyde are subjected to condensation in a molar ratio of 1:(1.5 to 1.8) until a dilutability with water, measured at 20°C, of at least 1:2 is reached, and 5 to 20% by weight, relative to resin solids content, of a compound rich in hydroxyl groups, or several compounds rich in hydroxyl groups, belonging to the series of polyhydric alcohols, non-reducing sugars or low-molecular enzymatic degradation products of starch having a glucose content below 1% or hydrogenation products thereof are added before, during or after the condensation reaction, and the ratios are selected in such a way that solutions having a resin solids content of more than 60% by weight are formed.

6. Process according to Claim 5, characterised in that 5 to 12% by weight, relative to resin solids content, of the compound rich in hydroxyl groups are added.

7. Process according to Claim 5 or 6, characterised in that up to 25% by weight of the melamine are replaced by other aminoplast formers.

8. Process according to one or more of Claims 5 to 7, characterised in that 1 to 12%, relative to resin solids content, of other known modifying agents for impregnating resins are additionally added.

**Revendications**

1. Solution aqueuse d'une résine mélamine-formaldéhyde ayant une teneur de plus de 60% en poids en résine solide, contenant un pré-condensat mélamine-formaldéhyde avec le cas échéant un ou plusieurs agents de modification, caractérisée en ce que le rapport molaire mélamine:formaldéhyde est compris entre 1:1,5 et 1:1,8 et sa diluabilité à l'eau à la température de 20°C est d'au moins 1:2, sa viscosité est d'au plus 30 secondes suivant la norme allemande 4 DIN 53 211 à 20°C et sa stabilité d'au moins 3 semaines, et en ce que la résine comprend 5 à 20% en poids, par rapport à la résine solide, d'un ou de plusieurs composés riches en groupes hydroxyliques pris parmi des polyols, des sucres non réducteurs ou des produits de dégradation enzymatique à faible masse moléculaire de l'amidon dont la teneur en glucose est inférieure à 1%, ou de leurs produits d'hydrogénation.

2. Solution selon la revendication 1 caractérisée en ce que la résine contient 5 à 12%, du poids de la fraction de résine solide, du composé hydroxylique.

3. Solution selon la revendication 1 ou 2 caractérisée en ce que jusqu'à 25% en poids de la mélamine sont remplacés par d'autres matières formant des aminoplastes.

4. Solution selon l'une quelconque des revendications 1 à 3, caractérisée en ce que la résine contient, par rapport à la fraction de résine solide, 1 à 12% d'autres agents modifiants connus pour résines d'imprégnation.

5. Procédé de préparation de solutions aqueuses de résines mélamine-formaldéhyde contenant plus de 60% en poids de résine solide, par condensation de la mélamine avec le formaldéhyde dans de l'eau à un pH alcalin pouvant s'élever jusqu'à 10,4, procédé caractérisé en ce que l'on condense la mélamine avec le formaldéhyde dans un rapport molaire compris entre 1:1,5 et 1:1,8 jusqu'à une diluabilité à l'eau, à la température de 20°C, d'au moins 1:2, et avant, pendant ou après la condensation, on ajoute 5 à 20%, du poids de la fraction de résine solide, d'un ou de plusieurs composés riches en groupes hydroxyliques pris parmi des polyols, des sucres non réducteurs ou des produits de dégradation enzymatique à faible masse moléculaire de l'amidon dont la teneur en glucose est inférieure à 1%, ou de leurs produits d'hydrogénation, et on choisit les proportions pour qu'il se forme des solutions à plus de 60% en poids de fraction de résine solide.

6. Procédé selon la revendication 5, caractérisé en ce que l'on ajoute 5 à 12% en poids du composé hydroxylique par rapport à la fraction de résine solide.

7. Procédé selon la revendication 5 ou 6, caractérisé en ce que l'on remplace jusqu'à 25% en poids de la mélamine par d'autres matières formant des aminoplastes.

8. Procédé selon l'une quelconque des revendications 5 à 7, caractérisé en ce que l'on ajoute, par rapport à la fraction de résine solide, encore 1 à 12% d'autres agents modifiants connus pour résines d'imprégnation.